# EUROPEAN PATENT APPLICATION

(11) **EP 0 744 428 A2**
(43) Date of publication of application: **27.11.1996**
(21) Application number: 96201436.1
(22) Date of filing: 22.05.1996
(51) Int. Cl.: C08G 18/83

(54) **Polymers and products derived therefrom**

(30) Priority: 26.05.1995 GB 9511758
(71) Applicant: KODAK LIMITED, Harrow, Middlesex HA1 4TY (GB); EASTMAN KODAK COMPANY, Rochester, New York 14650-2201 (US)
(72) Inventor: Purbrick, Malcolm D., Harrow, Middlesex, HA1 4TY (GB); Wear, Trevor J., Harrow, Middlesex, HA1 4TY (GB); Al-Lamee, Kadem G., Harrow, Middlesex, HA1 4TY (GB); Bamford, Clement H., Harrow, Middlesex, HA1 4TY (GB)
(74) Representative: Nunney, Ronald Frederick Adolphe

(57) **Abstract**

A fibre-forming or film-forming polyamide, polyurethane or polyurea contains side chains attached to the polymer through the nitrogen atom of the urethane or amide or a nitrogen atom of the urea groups of the polymer. The side chains contain functional groups containing at least two atoms capable of forming hydrogen bonds with atoms in corresponding groups in another molecule, hereafter referred to as the guest molecule, containing said corresponding groups to effect attachment of the guest molecule to the polymer.

The functional groups containing atoms capable of hydrogen bonding with atoms in corresponding groups in the guest molecule can be hydroxyl, primary, secondary or tertiary amino groups or >C=O groups. The functional groups may be comprised in a diamino triazine structure and the corresponding groups comprised in a uracil structure thereby providing the capability of forming three hydrogen bonds. The functional groups may be comprised in structures which are present in the nucleic acids for example adenine, thymine, guanine, cytosine, uracil and 2,6-diamino pyridine.

## Description

### Field of the Invention

This invention relates to polymers and products derived therefrom. More particularly, fibre-forming and film-forming polyamide, polyurea and polyurethane polymers are provided bearing active substituents which permit the attachment by hydrogen bonding of compounds to the polymers.

### Background of the Invention

The preparation of polyamide, polyurethane and polyurea polymers is known. For example, polyurethanes comprise the reaction products of polyisocyanates with polyhydroxy compounds. Fibres or films can be prepared from solutions or melts of such polymers having a sufficiently high molecular weight.

GB-A-1,530,990 describes the production of electrostatically spun polyurethane tubular products for use as prosthetic structures. Also, GB-A-1,527,592 describes the use of a mat of electrostatically spun polyurethane fibres in a product suitable for use as a wound dressing.

WO 92/13018 describes the modification of fibre-forming and film-forming polyamides, polyureas and polyurethanes by the incorporation of active substituents, which active substituents are capable of reaction with amino or thiol groups in biological compounds to form a structure in which the biological compound is bound by one or more covalent bonds to the polymer.

### Problem to be solved by the Invention

For certain applications it may be desirable that the molecule bonded to the polymer, hereafter referred to as the guest molecule, is progressively released from the polymer, that is to say gradually over a period of time. When the guest molecule is covalently bonded to the polymer this may not be readily achievable because the covalent bonding is normally strong and removal of the guest molecule requires a relatively severe treatment which may be difficult to control in a manner required for a progressive release. The present invention provides a solution to this problem by providing a polymer which can form an adduct with a guest molecule by hydrogen bonding and from which the guest molecule can be more readily released.

### Summary of the Invention

According to the present invention there is provided a fibre-forming or film-forming polyamide, polyurethane or polyurea polymer containing side chains attached to said polymer through the nitrogen atom of the amide or urethane or a nitrogen atom of the urea groups of said polymer, the side chains containing functional groups containing at least two atoms capable of forming hydrogen bonds with atoms in corresponding groups in another molecule, hereafter referred to as the guest molecule, containing said corresponding groups to effect attachment of the guest molecule to the polymer.

### Advantageous Effect of the Invention

The fact that the the guest molecule is bonded to the polymer by hydrogen bonding means that the guest molecule can be released by inducing cleavage of the bonding. The guest molecule can be removed from the adduct in a progressive manner, which may be by an elution step and is suitable, for example, for the release of biocide into wash water.

### Detailed Description of the Invention

The polymers of the invention can be prepared by modifying any polyamide, polyurethane or polyurea having fibre-forming or film-forming properties.

The polymer may be an elastomer and in a preferred embodiment of the invention, a polyetherurethane is employed. Examples of suitable commercially available polymers from which polymers of the invention can be prepared include, but are not limited to, BIOMER™, TECOFLEX™,PELLETHANE™, and ESTANE™ polymers.

The functional groups of the polymer containing atoms capable of forming hydrogen bonds with atoms in corresponding groups in the guest molecule can be hydroxyl, primary, secondary or tertiary amino groups or carbonyl ie >C=O.

Preferably the side chain of the polymer has at least 2 such groups, for example, two or more primary amino groups.

Preferably the hydrogen bonds are formed between a hydrogen atom in a primary amino group and an oxygen atom in a >C=O group, thus -N-H---O- where the N atom is in the primary amino group and the oxygen atom is in the >C=O group or between the hydrogen atom in a secondary amino group and a tertiary nitrogen atom, thus -N---H-N- where the first N atom is the tertiary nitrogen atom and the second nitrogen atom is in a secondary amino group.

For example, the hydrogen bonding can be between the nitrogen atom in a primary amino group in the polymer and an oxygen atom in a carbonyl ie >C=O in the guest molecule or vice versa.

In a preferred embodiment two primary amino groups can be together with a secondary amino group comprised in a diaminotriazine structure and the corresponding groups can be comprised in a uracil structure, or vice versa thereby providing the capability of forming three hydrogen bonds.

The functional groups may also be comprised in structures that are present in the nucleic acids and which contain functional groups whose atoms can form hydrogen bonds in the nucleic acids. For example, the structures may be adenine, thymine, guanine, 2,6-diamino-pyridine, uracil and cytosine and the functional groups may be the amino and carbonyl groups in these structures whose N and O atoms form hydrogen bonds in the nucleic acids.

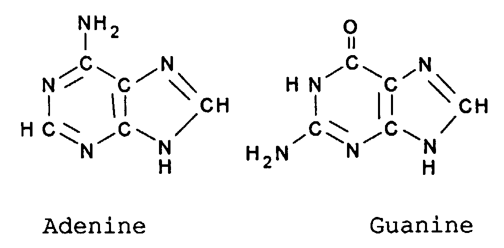

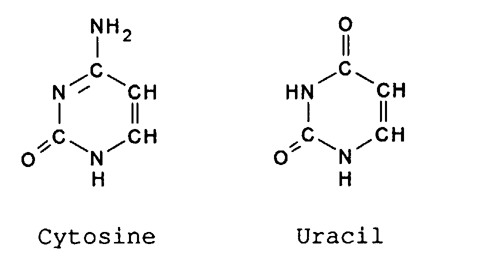

In the present invention hydrogen bonds may be formed between the same specific base pairs that hydrogen bond in the nucleic acids. Examples of specific base pairs are: adenine-thymine, guanine-cytosine and 2,6-diamino-pyridine-uracil.

The polymers of the invention preferably contain units of the formula: 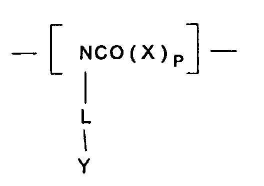 wherein -(NCO (X)ₚ)- in which X is -O- or-NH- and p is 0 or 1, is an amide, urethane or urea group in said polymer backbone, L is a linking group and Y is a group containing at least two atoms capable of forming hydrogen bonds with atoms in correponding groups.

Preferably there is interposed between the L and Y groups a group of formula 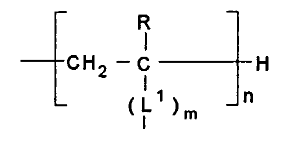 wherein R is hydrogen or alkyl, L' is a linking group to Y, m is 0 or 1 and n is an integer from 10 to 150.

Preferably the polymers have a group, herein referred to as a spacer group,interposed between the functional group and the N atom of the polymer, to provide the functional group with the freedom required for hydrogen bond formation with the correponding group. Conveniently the spacer group contains, or is equivalent to, a chain of at least 6 carbon atoms. Usually, the chain will contain not more than 30 carbon atoms since there is no advantage with chains of greater length than this. Preferably the chain length is from 8 to 15 carbon atoms, or where the chain contains atoms other than carbon such as nitrogen, equivalent to a chain length of 8 to 15 carbon atoms.

Preferably the spacer group does not contain an uninterrupted -(CH₂)- chain where n is greater than 12 since such groups are hydrophobic and will make bonding with the guest molecule more difficult.

The polymers of the invention containing functional groups can be prepared by a number of methods. One method comprises modifying the starting polymer by first incorporating a spacer unit into the structure and then attaching the functional group to the spacer unit. For example, when the starting polymer is a polyurethane, this may involve first reacting the polymer with an excess of a diisocyanate to modify the polymer to one having an isocyanate terminated side chain at the N atom which is then reacted with a diamine to produce a primary amine terminated product which is then reacted with cyanuric chloride and ammonia to yield the functionalised polymer in which the functional groups are the two primary amino groups and a ring nitrogen of a diamino triazine. This provides the capability of forming three hydrogen bonds with suitably positioned corresponding groups on the guest molecule.

In a preferred embodiment of the invention, the functionalised polymer is provided in fibrous form. The fibres may be produced by electrostatic spinning in accordance with the teaching of GB-A-1,530,990. The activated polymer of the invention may be spun into fibres. Alternatively, a polymer may be spun into fibres and then modified by the attachment of the functional groups.

In the electrostatic spinning process, the fibres are collected as a porous mat on a suitably located receiver. In this way, a substrate coated with a layer of the fibres can be produced. Alternatively, the fibrous mat can be stripped from the receiver.

The fibrous product can be produced in a variety of shapes. For example, by using a cylindrical receiver, a tubular product can be made.

The fibres obtained by the electrostatic spinning process are thin and can be of the order of 0.1 to 25 micrometres in diameter. Fibre diameters of 0.5 to 10 micrometres, especially 1.0 to 5 micrometres may be preferred.

The polymer may be conveniently spun from solution. Suitable solvents include dimethylformamide, N,N-dimethylacetamide, dichloromethane and methyl ethyl ketone. Solvent mixtures may be preferred, such as a mixture of N,N-dimethylformamide and methyl ethyl ketone (1.45:1 weight ratio). The concentration of polymer in solution will depend upon the amount required to provide adequate fibre properties and will be influenced by the need to produce a liquid of appropriate viscosity and speed of fibre hardening. For example, a preferred concentration when using BIOMER™ polymer, a commercially available polyetherurethane having a molecular weight in the region of 60,000, dissolved in N,N-dimethylacetamide is from 10 to 20% w/w, for example, 16%w/w.

Any convenient method may be employed to bring the polymer solution into contact with the electrostatic field for spinning. For example, the solution may be supplied to an appropriate position in the electrostatic field by feeding it to a nozzle from which it is drawn by the field to form fibres. The solution may be fed from a syringe reservoir to the tip of a grounded syringe needle, the tip being located at an appropriate distance from an electrostatically charged surface. Upon leaving the needle, the solution forms fibre between the needle tip and the charged surface. The electrostatic potential employed may be conveniently from 10 to 100Kv, preferably from 10 to 50Kv.

The pore size and porosity of the fibrous product may be controlled, for example, by varying such parameters as the diameter of the fibres and their density of deposition.

Typically, the fibrous product comprises a network of very fine fibres having a diameter of approximately 1 micrometer. The fibres are melded at many junction points and enclose irregular holes or pores with a typical dimension in the range from 5 to 10 micrometers. The overall surface area of the fibres is extremely large. For example, 1g of the fibrous material may have a total surface area of approximately 4m².

According to another aspect of the invention there is provided a polymer as hereinbefore defined having a guest molecule attached thereto by two or more hydrogen bonds.

In the hydrogen bonded adducts,the polymers of the invention will normally be bonded to the guest molecule by hydrogen bonding and there will be no significant degree of covalent bonding. In chemical processes it is impossible to completely eliminate side reactions and it is therefore not possible to rule out the possibility of a small number of covalent bonds forming, dependimg on the conditions under which the adduct is formed and the reactivity of the starting materials. However the guest molecule is bonded to the polymer predominantly by hydrogen bonds and in most cases almost exclusively by hydrogen bonds, and covalent bonding, if present does not interfere significantly with the functionality of the system ie the guest molecule can be recovered substantially completely from the host polymer. According to another aspect of the invention a method of separating a guest molecule containing one or more functional groups capable of forming hydrogen bonds from a liquid containing said guest molecule comprising contacting the liquid with a polymer as hereinbefore defined and allowing the guest molecule to become attached to the polymer by hydrogen bonding.

According to a further aspect of the invention a method for the progressive release of a guest molecule from an adduct in which the guest molecule is bonded to a polymer by hydrogen bonding comprises eluting the guest molecule from the polymer with an eluent.

The method can comprise progressively releasing a compound capable of molecular recognition or alternatively progressively releasing a biocide into wash water.

The invention is illustrated by the following Examples. BIOMER ™ is a commercially available polyetherurethaneurea supplied by Ethicon of Someville N.J., U.S.A. It has a molecular weight (MnW) of about 60,000. and has the following structure:

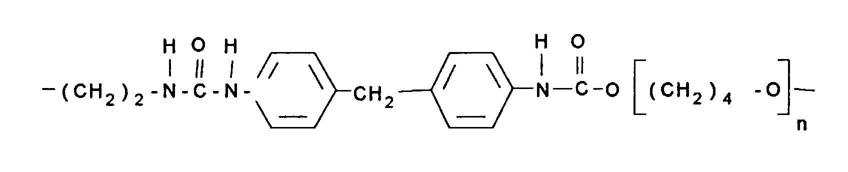

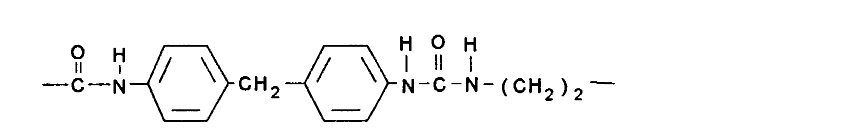

### Example 1

Fifteen discs of Biomer™ membrane (each 2.54cm diameter, 0.5mm thick) were reacted with 40% hexamethylene diisocyanate in hexane for 48 hours at 40°C. The resulting isocyanate terminated polymer membrane (1) was washed carefully with dry acetonitrile.

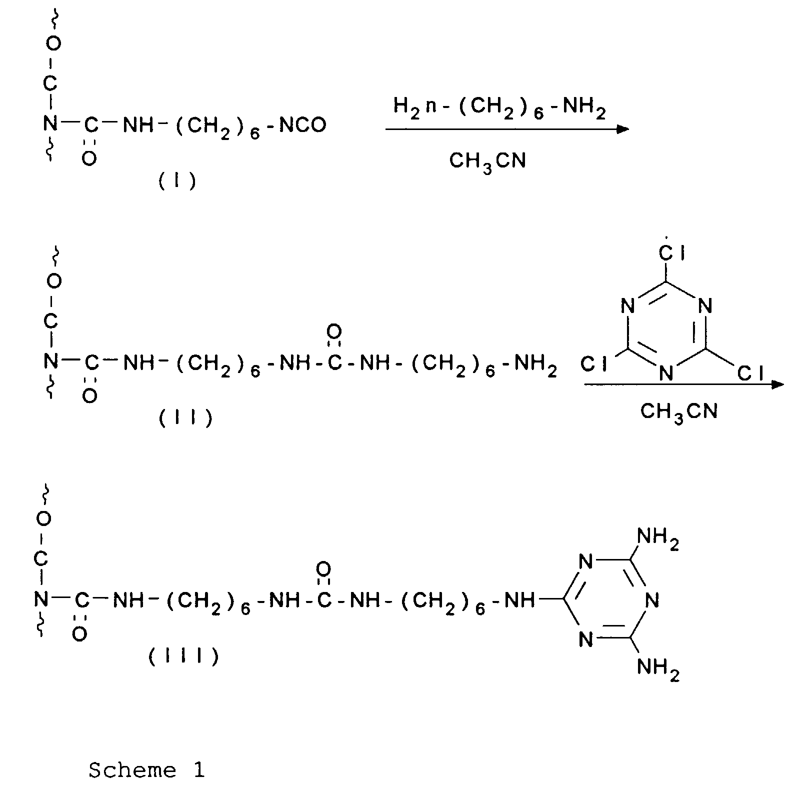

### Coupling of cyanuric chloride to the membrane.

This proceeded in three stages as shown in scheme 1. First, six discs of membrane (I) were reacted with an excess of hexemethylene diamine solution in dry acetonitrile at 30°C for 24 hours. The resulting aminated membrane (II) was washed with dry acetonitrile and dried in vacuo. In the second stage, the discs of membrane (II) were reacted with a solution of cyanuric chloride (8g) in acetonitrile (50ml) at 4°C for 4 hours. Finally, the discs were reacted with an excess of aqueous ammonia (30%) at 30-40°C for 2 hours to give the polymer containing the diamino triazine group as shown in (III).

### Preparation of I¹²⁵ labelled uracil derivative (V1)

This proceeded as shown in Scheme 2. A suspension of 5-amino uracil (IV) (4.8gm, 3.8 x 10⁻³ moles) in dichloromethane (20ml) was added to a solution of I¹²⁵ labelled Bolton-Hunter reagent (V) (1gm, 3.8 x 10⁻³ moles) in dry acetonitrile (20ml). A precipitate formed within one hour. The reaction was left to proceed to completion overnight, and the product filtered off and washed extensively with acetonitrile. The resulting compound (VI) was highly radioactive.

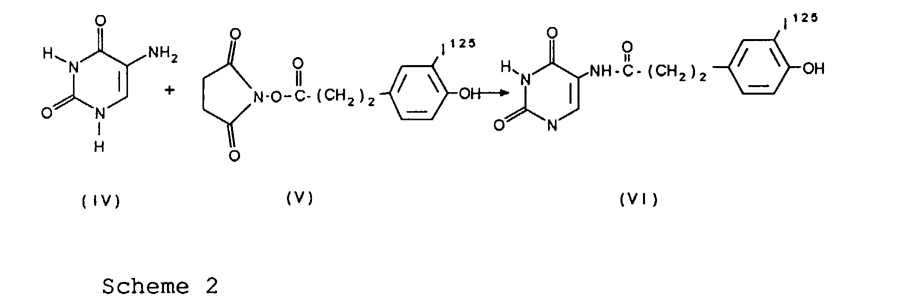

### Forming hydrogen bonded product.

The interaction of the polymer (III) with the I¹²⁵ labelled uracil derivative(VI) was carried out in three different solvent media viz, water, borate buffer (pH 8.9) and chloroform. In each case the I¹²⁵ labelled compound (VI) (20mg) was suspended in 5ml of solvent and one disc of membrane (III) immersed in the resulting suspension for 2 hours at room temperature. Each disc was then carefully washed with the solvent medium before counting. The weights of (VI) coupled, calculated on this basis, are shown in Table 1.

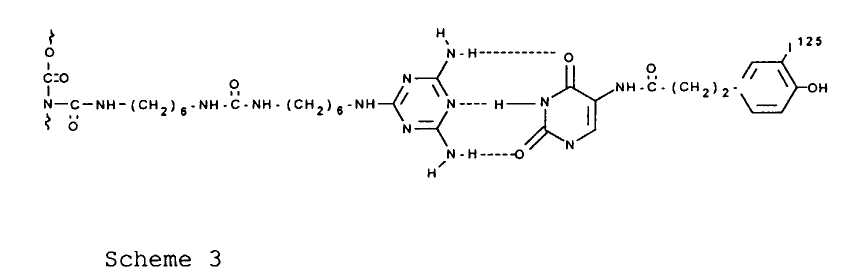

**Table 1**

| Membrane | Solvent | Wt(VI) mg/ Wt PEU gm |
|---|---|---|
| (111) | distilled water | 24.96 |
| control | distilled water | 1.67 |
| (111) | borate buffer pH 8.9 | 5.40 |
| control | borate buffer pH 8.9 | 0.89 |
| (111) | chloroform | 13.65 |
| control | chloroform | 3.23 |

control is membrane (11) as described above.

These results show that the highest coupling of (VI) to (III) was achieved in distilled water. The resulting adduct has the structure (VII)

### Release of compound (VI) from the adduct (VII)

Four discs were immersed in 5ml of eluent as specified in Table 2 for 2 hours at the end of which time the radioactivity of the eluent was counted and the degree of release of compound (VI) determined. The results are summarised in Table 2.

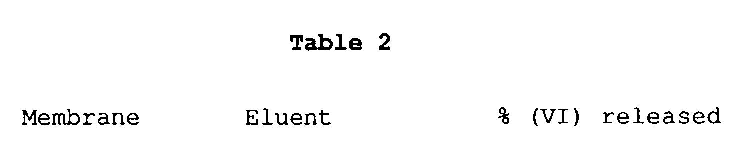

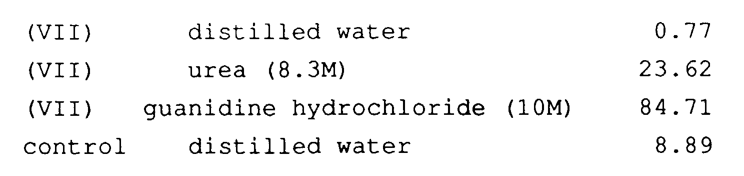

control is membrane (II) described above.

### Example 2

A Tecoflex membrane of formula (VIII) was reacted with an excess (40% w/v) of hexamethylene diisocyanate in hexane for 17hours at 40°C. The membrane was then washed extensively with hexane and acetonitrile, then dried in vacuum at room temperature. The isocyanate terminated polymer (IX) was then converted to the polymer of formula (X) containing diamino-triazine groups as described in Example 1.

Four solutions of Deoxythymidine 5'triphosphate (dTTP) sodium salt labelled with ³²P in MES buffer, pH 6 were prepared (final concentration, 3.75mg/ml). Three discs of membrane (X) were incubated at different times (2,4,6 hours respectively) in these solutions. One disc of the membrane without the diamino triazine was used as control and incubated for 4 hours in the fourth solution of labelled dTTP. After those incubation times the discs were washed extensively with PBS and finally with water before they were counted. The amounts of dTTP coupled to each membrane are shown in Table 3.

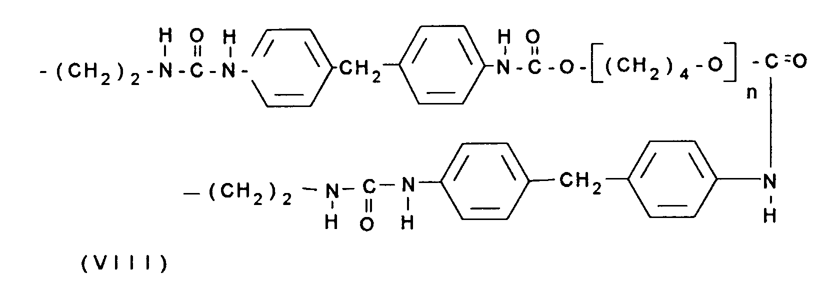

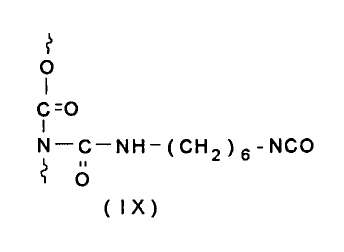

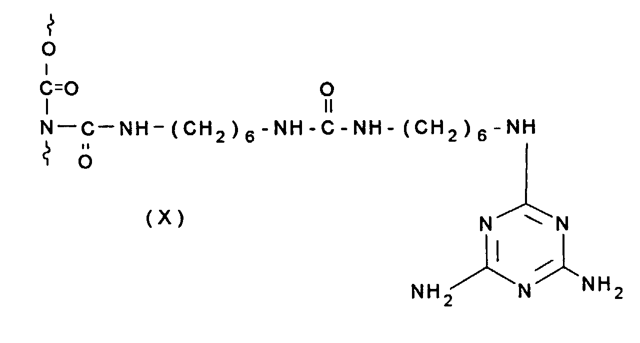

**Table 3**

| Sample No | Incubation time(hour) | dTTP micro gm/disc | dTTP micro gm /gm Tecoflex |
|---|---|---|---|
| 1 | 2 | 2.82 | 49.04 |
| 2 | 4 | 3.50 | 60.84 |
| 3 | 6 | 4.85 | 84.35 |
| 4(control) | 4 | 0.04 | 0.70 |

Table 3 shows that the amounts of dTTP bound to the membrane (I) increase with the incubation time.

The structure of the adduct is as follows:

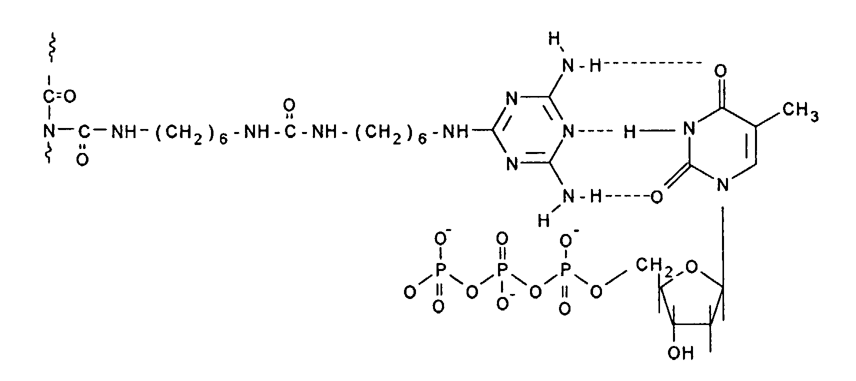

## Claims

1. A fibre-forming or film-forming polyamide, polyurethane or polyurea polymer containing side chains attached to said polymer through the nitrogen atom of the amide or urethane or a nitrogen atom of the urea groups of said polymer, the side chains containing functional groups containing at least two atoms capable of forming hydrogen bonds with atoms in corresponding groups in a guest molecule containing said corresponding groups to effect attachment of the guest molecule to the polymer.

2. A polymer as claimed in claim 1 comprising units of the formula: 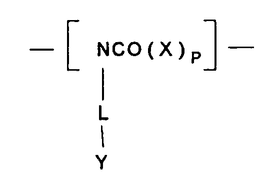 wherein -(NCO (X)ₚ)- in which X is -O- or-NH- and p is 0 or 1, is an amide, urethane or urea group in said polymer backbone, L is a linking group and Y is a functional group containing at least two atoms capable of forming hydrogen bonds with atoms in correponding groups in a guest molecule.

3. A polymer as claimed in claim 2 wherein the linking group contains a group interposed between the L and Y groups having the formula 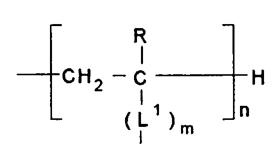 wherein R is hydrogen or alkyl, L' is a linking group to Y, m is 0 or 1 and n is an integer from 10 to 150.

4. A polymer as claimed in any one of claims 1 to 3 wherein the functional groups are hydroxyl, primary, secondary or tertiary amino groups, or >C=O groups.

5. A polymer as claimed in any one of claims 1 to 4 wherein the functional groups are comprised in structures that are present in the nucleic acids.

6. A polymer as claimed in claim 5 wherein the structures are adenine, thymine, guanine, 2,6,-diamino-pyridine, uracil and cytosine.

7. A polymer as claimed in any one of claims 1 to 6 having a guest molecule attached thereto by two or more hydrogen bonds.

8. A polymer as claimed in claim 7 wherein the hydrogen bonding is between the nitrogen atom of a primary or secondary amino group in the polymer and an oxygen atom in a >C=O in the guest molecule or vice versa.

9. A polymer as claimed in claim 7 or 8 wherein the hydrogen bonding is between one or more of the same specific base pairs that hydrogen bond in the nucleic acids.

10. A method of separating a guest molecule containing functional groups containing at least two atoms capable of forming hydrogen bonds from a liquid containing said guest molecule comprising contacting the liquid with a polymer as claimed in any one of claims 1 to 6 and allowing the guest molecule to become attached to the polymer by hydrogen bonding.

11. A method for the progressive release of a guest molecule from an adduct in which the guest molecule is bonded to a polymer by hydrogen bonding which method comprises eluting the guest molecule from the polymer with an eluent.

12. A method as claimed in claim 11 which comprises progressively releasing a compound capable of molecular recognition.

13. A method as claimed in claim 11 which comprises progressively releasing a biocide into wash water.
